Europäisches Patentamt

European Patent Office

Office européen des brevets

(11) Veröffentlichungsnummer: **0 310 563**
**A1**

## (12) EUROPÄISCHE PATENTANMELDUNG

(21) Anmeldenummer: 88810669.7

(22) Anmeldetag: 28.09.88

(51) Int. Cl.⁴: **C 22 B 7/00**
C 22 B 3/00

(30) Priorität: 28.09.87 CH 3748/87

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **R.T.I. INTERNATIONAL B.V.**
**Johannes Vermeerstraat, 18**
**NL-1071 DR Amsterdam (NL)**

(72) Erfinder: **Hanulik, Jozef**
**Lerchenhalde, 45**
**CH-8046 Zürich (CH)**

(74) Vertreter: **Werner, Guy et al**
**Bugnion S.A. Case postale 375 10 Route de Florissant**
**CH-1211 Genève 12 - Champel (CH)**

(54) Verfahren zur elektrochemischen Trennung von Metallmischungen und -legierungen.

(57) Das Verfahren besteht darin, dass das Ausgangsmaterial in einem Elektrolyten gelöst wird und die in der Elektrolytlösung gelösten Metalle nacheinander entsprechend ihrem elektrochemischen Potential durch elektrochemisch jeweils unedlere Metalle substituiert und abgeschieden werden. Dabei wird die die gelösten Metalle enthaltende Elektrolytlösung kontinuierlich durch mehrere miteinander verbundene Zellen (1-12) geleitet, in denen die Elektrolytlösung mit jeweils elektrochemisch unedleren Metallen in Kontakt gebracht wird. Gleichzeitig zusammen abgeschiedene Metalle werden elektrolytisch voneinander getrennt, und die dabei wieder in Lösung gegangene Metalle werden ausserhalb der Elektrolysezelle wiederum durch elektrochemisch jeweils unedlere Metalle substituiert und abgeschieden.

Fig.1

EP 0 310 563 A1

**Beschreibung**

## Verfahren zur elektrochemischen Trennung von Metallmischungen und -Legierungen

Die Erfindung betrifft ein Verfahren zur elektrochemischen Trennung von Metallmischungen und -legierungen sowie eine Vorrichtung zur praktischen Ausführung dieses Verfahrens.

Die Erfindung ist insbesondere anwendbar zur Rückgewinnung von Schwermetallen aus Abfallschrott, wovon vor allem die metallischen Bestandteile zunehmend die Umwelt belasten und vergiften können.

Es sind Verfahren bekannt, womit aus Abfallschrott, etwa aus verbrauchten elektrischen Batterien, einige wenige, verhältnismässig wertvolle Metallkomponente elektrolytisch abgeschieden und zurückgewonnen werden, alle anderen Bestandteile aber verworfen und auf Deponien abgelagert werden.

Aufgabe der Erfindung ist die Schaffung einer Möglichkeit, womit auf ökonomische Weise, d.h. mit geringstem Aufwand an technischen Hilfsmitteln und Energie, und möglichst vollständig zumindest die in Abfallschrott enthaltenen Schwermetalle abgetrennt und zur Wiederverwertung wiedergewonnen werden können, so dass diese nicht mehr in Deponien abgelagert zu werden brauchen und dort die Umwelt gefährden.

Dies wird erreicht mit einem Verfahren gemäss Patentanspruch 1, wobei in vorteilhafter Weise eine Vorrichtung gemäss den Vorrichtungsansprüchen Verwendung finden kann.

Zweckmässige Ausführungsmöglichkeiten ergeben sich aus den Unteransprüchen.

In jedem Fall werden bei der praktischen Ausführung der Erfindung in technisch überraschend einfacher Weise und ohne besonderen Energieaufwand die unterschiedlichen elektrochemischen Eigenschaften der in Betracht kommenden Schwermetalle, insbesondere deren verschiedene elektrochemischen Normalpotentiale nach der sog. Spannungsreihe, ausgenutzt. Dieses Phänomen besagt bekanntlich, dass jedes Metall in seiner Metallsalzlösung von einem sog. "unedleren" Metall mit geringerem elektrochemischen Potential substituiert und unter Elektronenaufnahme metallisch ausgeschieden wird, wobei das unedlere Metall unter Elektronenabgabe als Kation in Lösung geht, ein Vorgang welcher ohne Energiezufuhr von aussen abläuft.

In der beigefügten Zeichnung sind schematisch Ausführungsmöglichkeiten zur praktischen Durchführung der Erfindung dargestellt, wobei zeigen :

Figur 1 eine Batterie hintereinandergeschalteter Abscheidungszellen,

Figur 2 eine Abscheidungszelle in einer und

Figur 3 eine Abscheiedungszelle in anderer Ausführung.

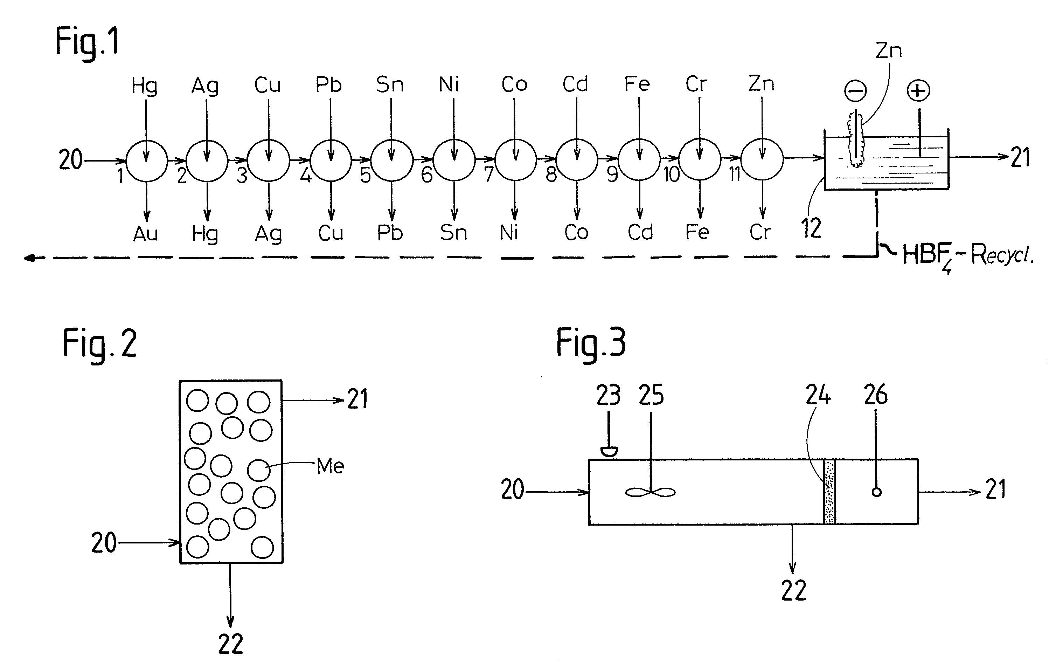

Danach besteht die Vorrichtung nach Figur 1 aus einer Batterie hintereinandergeschalteter Abscheidungszellen 1 bis 11 und einer am Schluss angeordneter Elektrolysezelle 12. Hierbei sind die Zellen 1 bis 12 mit je einem Eingang 20 und einem Ausgang 21 und die Zellen 1 bis 11 mit einer Austragseinrichtung 22 für abgeschiedenes Metall ausgestattet.

Bei der in Figur 2 dargestellten Ausführung der Zellen enthalten diese stationär ein Metall Me mit einem bestimmten elektrochemischen Potential, welches von der Zelle 1 bis zur Zelle 11 gemäss der sog. Spannungsreihe abnimmt, wie es in Figur 1 in der oberen Reihe mit den jeweiligen Symbolen angedeutet ist. Diese Metalle, ausser Quecksilber, können beispielsweise, wie dargestellt, in Form von Kugeln ausgebildet sein. Diese Kugeln mit einem Durchmesser von beispielsweise 3 bis 5 cm sind lose mit Zwischenräumen dazwischen neben- und übereinandergeschichtet und ermöglichen ein Durchströmen des Elektrolyten, welcher diese Kugeln dabei umspült.

Das Herstellungsmaterial der Zellen und Verbindungsleitungen muss selbstverständlich widerstandsfähig und unempfindlich gegenüber dem Elektrolytlösungsmittel sein. Hierfür haben sich vor allem gewisse Kunststoffe, wie Polyäthylen und Polypropylen, als besonders vorteilhaft erwiesen. Aber auch natürliche Materialien mit einer dichten Gummibeschichtung können hierfür in Betracht kommen.

Den Elektrolyten erhält man durch anodische Auflösung der zu trennenden Ausgangsmischungen oder -legierungen, beispielsweise der Metalle aus verbrauchten elektrischen Batterien, elektronischen Printplatten und anderem Elektronikschrott sowie auch aus ausgedienten Kühlschränken und Kraftfahrzeugen, in Borfluorwasserstoffsäure ($HBF_4$), in welcher fast alle Metalle löslich sind.

Diese Elektrolytlösung wird durch den Zelleneingang 20 in die erste Zelle 1 eingeleitet und durchströmt dann nacheinander die Zellen 1 bis 11, wo sie mit dem jeweils darin enthaltenen Metall in reaktive Berührung kommt. Dabei wird beispielsweise in der Zelle 1, welche Quecksilber enthält, in dem Elektrolyten gelöstes Gold metallisch abgeschieden, während eine äquivalente Menge Quecksilber als Kation in Lösung geht. In der Zelle 2, welche Silber enthält, wird das demgegenüber edlere Quecksilber aus der Elektrolytlösung abgeschieden und eine äquivalente Menge an "unedlerem" Silber geht als Kation in Lösung. Dieses wird dann in der Zelle 3 mittels Kupfer ausgeschieden, welches seinerseits in der Zelle 4 von Blei abgeschieden wird, und so fort, bis die aus der letzten Zelle 11 austretende Elektrolytlösung an Schwermetallen nur noch eine äquivalente Menge an Zink-Kationen enthält, die dann in der Elektrolysezelle 12 elektrolytisch als metallisches Zink abgeschieden werden können. Es ist aber auch möglich, das gelöste Zink chemisch aufzuarbeiten, beispielsweise durch Ausfällung als Hydroxid und Reduktion zum metallischen Zink. In diesem Fall braucht dann für die Trennung der Ausgangsmischungen nicht einmal elektrische Energie aufgewandt zu werden.

Noch unedlere Metalle mit noch geringerem elektrochemischem Potential sind nicht direkt aus der Elektrolytlösung ausscheidbar und bleiben als Fluoroborate gelöst. Diese Lösung tritt dann am Ausgang 21 der letzten Zelle aus der Vorrichtung aus. Es handelt sich dabei im wesentlichen um Erdalkali- und Alkalimetalle, wie Aluminium, Magnesium, Natrium, Kalium, Lithium, die allerdings in den Ausgangsmaterialien meist in nur ganz geringen Mengen vorkommen und nach bekannten Technologien wiederaufbereitet werden.

Wenn, wie bei der Zellenausführung nach Figur 2, das Abscheidungsmetall Me in Form von lose übereinandergeschichteten Kugeln verwendet wird, kann es zweckmässig sein, eine Rütteleinrichtung oder dergleichen vorzusehen, die von Zeit zu Zeit in Tätigkeit gesetzt wird, um die Kugeln von an ihrem Aussenumfang abgeschiedenem Metall zu befreien und freie Oberflächen zu schaffen. Die Kugeln selbst schrumpfen allmählich mit fortschreitender Lösung ihres Metalles, was bis zur völligen Auflösung führen kann. Das abgeschiedene und in der Zelle nach unten sinkende Metall wird dann meist in Form eines kristallinen Schlammes an der Austragseinrichtung 22 abgezogen.

Die Reaktionsgeschwindigkeit ist naturgemäss abhängig von der für die Reaktion zur Verfügung stehenden Jonenaustauschfläche und der Reaktionszeit und kann durch Erwärmen beschleunigt werden.

Die abgewandelte Ausführungsform der Abscheidungszelle nach Figur 3 ist insbesondere für den Einsatz bei binären Systemen geeignet, sie kann aber ebenfalls auch für einen kontinuierlichen Betrieb Verwendung finden. Sie besteht aus einem rohrförmigen Gehäuse mit einem Eintritt 20 und einem Austritt 21 für die Elektrolytlösung und ist in Strömungsrichtung hinter dem Zelleneintritt mit einer Einrichtung 23 zum dosierten Eintragen des Abschiedungsmetalles ausgestattet. Sie besitzt ferner ebenfalls eine Austragseinrichtung 22 für abgeschiedenes Metall und kann darüberhinaus vor dem Zellenaustritt 21 mit einem Filter 24 und an der Eintragseinrichtung 23 mit einem Rührer 25 versehen sein.

Soll in dieser Zelle beispielsweise Blei mittels Zink abgeschieden werden, wird durch die Eintragseinrichtung 23 in den das Blei gelöst enthaltenden und durch die Zelle strömenden Elektrolyten feines Zink-Pulver zweckmässigerweise unter Rühren mit dem Rührer 25 im Ueberschuss in der Weise eingetragen, dass eine geeignete Reaktionstemperatur erreicht und aufrechterhalten, eine spontane Reaktion und Ueberhitzung jedoch vermieden wird. Durch eine entsprechende Dosierung der Zinkpulver-Zugabe hat man es damit in gewisser Weise in der Hand, die Reaktion beliebig schnell ablaufen zu lassen. Das an der Austragseinrichtung 22 als kristalliner Schlamm abgezogene Blei ist nahezu rein und enthält weniger als etwa 1 % Zink, welches aus unreagiertem Zink-Pulver besteht und mit Borfluorwasserstoffsäure, gegebenenfalls unter Erwärmung, ausgewaschen werden kann. Der aus dem Zellenaustritt 21 wieder austretende Elektrolyt enthält kein Blei mehr, dafür aber eine dem abgeschiedenen Blei äquivalente Menge an Zink-Ionen, die dann entweder elektrolytisch als metallisches Zink abgeschieden oder chemisch ausgefällt und weiterverarbeitet werden können.

Der Filter 24 soll verhindern, dass im Ueberschuss eingetragenes Zink-Pulver und ausgeschiedenes Blei mit dem Elektrolyten mitgerissen wird.

In Strömungsrichtung hinter dem Filter 24 und vor dem Zellenaustritt 21 kann weiterhin eine Analyseneinrichtung 26 vorgesehen werden, welche kontinuierlich arbeiten und den durchlaufenden Elektrolytstrom dauernd auf enthaltene Metallionen, im beschriebenen Beispiel auf Blei- und Zink-Ionen, überwachen kann, so dass der Zink-Eintrag auch danach entsprechend dosiert, etwa bei auftretenden Blei-Ionen erhöht werden kann.

Unter gewissen Bedingungen, vor allem auch in Abhängigkeit von der Natur des zu verarbeitenden Ausgangsmaterials, kann es zweckmässig sein, die zu trennenden Metalle nicht einzeln nacheinander abzuscheiden, wie es im Zusammenhang mit Figur 1 beschrieben wurde, sondern jeweils eine Gruppe von Metallen, wobei eine Mehrzahl von Metallen mit einander entsprechendem elektrochemischen Potential gleichzeitig durch ein oder mehrere gegenüber allen diesen Metallen elektrochemisch unedlere Metalle substituiert und abgeschieden und diese Gruppe zusammen abgeschiedener Metalle dann elektrolytisch oder nach anderen bekannten metallurgischen Verfahren aufgetrennt wird. Die dabei wegen ihres geringeren elektrochemischen Potentials wieder in Lösung gehenden Metalle können dann wiederum auf einem elektrochemisch jeweils unedleren Metall abgeschieden werden. So ist es beispielsweise möglich, aus der Elektrolytlösung in einer 1. Gruppe gleichzeitig elektrochemisch edle Metalle, wie Gold, Quecksilber, Silber und Kupfer, mittels Blei abzuscheiden und in einer 2. Gruppe weniger edle Metalle, wie Blei, Zinn, Nickel, Kobalt, Cadmium, Eisen und Chrom, mittels Zink, welches dann mit anderen noch vorhandenen Metallen als 3. Gruppe direkt an einer Kathode abscheidbar oder chemisch ausfällbar ist. Die 4. Gruppe enthält dann nur noch unedle, nicht direkt aus der Lösung ausscheidbare Metalle, wie Aluminium, Magnesium, Natrium, Kalium, Lithium.

Selbstverständlich kann man je nach Bedarf und Zweckmässigkeit diese Gruppenaufteilung der zu trennenden Metalle auch weiter oder enger ausführen, indem beispielsweise eine feinere Aufteilung in Gruppen mit höchstens 3 Kationen erfolgt.

In jeder Ausführung ist es jedenfalls mit dem Verfahren und einer Vorrichtung gemäss der Erfindung möglich, Metallmischungen und -legierungen aufgrund der unterschiedlichen elektrochemischen Potentiale ihrer metallischen Bestandteile ohne Energieaufwand so voneinander zu trennen, dass die einzelnen Metalle einer Wiederverwertung zugeführt werden können, wodurch nicht nur in einfacher Weise ein schwerwiegendes Umweltproblem gelöst wird, sondern auch ein materieller Nutzen erzielbar ist.

Dadurch, dass bei Anwendung des erfindungsgemässen Verfahrens eine vollständige Auftrennung von Metallmischungen und -legierungen und eine Wiedergewinnung aller ihrer Bestandteile ermöglicht wird, kommt ferner hinzu, dass nunmehr Abfallprodukte, die bisher als mehr oder weniger wertlos angesehen wurden, sich neuerdings als eine wertvolle Quelle für metallische Rohstoffe erweisen, welche sonst nur aus Drittländern eingeführt werden mussten und nach Verarbeitung und Verbrauch weggeworfen wurden. Es kann daher mit der Erfindung ein echter Kreislauf vorhandener Metalle geschaffen und aufrechterhalten werden, in welchem lediglich geringe, verfahrenstechnisch bedingt unvermeidliche Verluste zu ersetzen bzw. zu ergänzen sind.

Diese "Recyclierung" der eingesetzten Materialien kann in vorteilhafter Weise auch bei dem Elektrolytlösungsmittel erfolgen, indem beispielsweise bei der Verwendung von Borfluorwasserstoffsäure die bei der Elektrolyse des Zinks in der Elektrolysezelle 12 in äquivalenter Menge wieder anfallende Säure, erforderlichenfalls nach geeigneter Reinigung, zu der Elektrolytherstellung zurückgeführt wird.

**Patentansprüche**

1. Verfahren zur elektrochemischen Trennung von Metallmischungen und -legierungen, dadurch gekennzeichnet, dass das Ausgangsmaterial in einem Elektrolyten gelöst wird und die in der Elektrolytlösung gelösten Metalle nacheinander entsprechend ihrem elektrochemischen Potential durch elektrochemisch jeweils unedlere Metalle substituiert und abgeschieden werden.

2. Verfahren nach Anspruch 1, dadurch gekennzeichnet, dass mehrere der in der Elektrolytlösung gelösten Metalle gleichzeitig durch ein oder mehrere elektrochemisch unedlere Metalle substituiert und abgeschieden werden.

3. Verfahren nach Anspruch 2, dadurch gekennzeichnet, dass gleichzeitig zusammen abgeschiedene Metalle elektrolytisch voneinander getrennt werden, wobei dabei wieder in Lösung gegangene Metalle ausserhalb der Elektrolysezelle wiederum durch elektrochemisch jeweils unedlere Metalle substituiert und abgeschieden werden.

4. Verfahren nach Anspruch 3, dadurch gekennzeichnet, dass die jeweils unedleren, in Lösung gegangenen Substitutionsmetalle elektrolytisch an einer Kathode abgeschieden werden.

5. Verfahren nach Anspruch 3, dadurch gekennzeichnet, dass die jeweils unedleren, in Lösung gegangenen Substitutionsmetalle chemisch aufgearbeitet werden.

6. Verfahren nach Anspruch 5, dadurch gekennzeichnet, dass die jeweils unedleren, in Lösung gegangenen Substitutionsmetalle als unlösliche Salze ausgefällt und zum Metall reduziert werden.

7. Verfahren nach Anspruch 1, 2 oder 3, dadurch gekennzeichnet, dass ein wenigstens drei Metallkationen gleichzeitig lösendes Elektrolytlösungsmittel verwendet wird.

8. Verfahren nach Anspruch 7, dadurch gekennzeichnet, dass als Elektrolyt eine Lösung der Metalle in Borfluorwasserstoffsäure verwendet wird.

9. Verfahren nach Anspruch 3, dadurch gekennzeichnet, dass vor der Elektrolyse von gleichzeitig zusammen abgeschiedenen Metallen eine Abdestillation von flüchtigen Metallen durchgeführt wird.

10. Verfahren nach Anspruch 3, dadurch gekennzeichnet, dass die Elektrolyse in einer sog. DIETZEL-Zelle mit walzenförmigen Kathoden durchgeführt wird.

11. Verfahren nach Anspruch 1 oder 2, dadurch gekennzeichnet, dass die die gelösten Metalle enthaltende Elektrolytlösung kontinuierlich durch mehrere miteinander verbundene Zellen geleitet wird, in denen die Elektrolytlösung mit jeweils elektrochemisch unedleren Metallen in Kontakt gebracht wird.

12. Verfahren nach Anspruch 10, dadurch gekennzeichnet, dass die als Elektrolytlösungsmittel verwendete und bei der Elektrolyse in äquivalenter Menge wieder anfallende Säure zu der Elektrolytherstellung zurückgeführt wird.

13. Vorrichtung zur Durchführung des Verfahrens nach einem oder mehreren der vorangegangenen Ansprüche, dadurch gekennzeichnet, dass mehrere, von der Elektrolytlösung kontinuierlich durchströmbare Zellen (1 bis 11) mit einem Strömungseingang (20) und einem Strömungsausgang (21) sowie mit einer Austragseinrichtung (22) für abgeschiedenes Metall versehen und an ihrem Ausgang mit dem Eingang der in Strömungsrichtung nachfolgenden Zelle verbunden sind und jeweils ein mit der Elektrolytlösung in Kontakt kommendes Metall (Me) mit in Strömungsrichtung von Zelle zu Zelle abnehmendem elektrochemischen Potential enthalten.

14. Vorrichtung nach Anspruch 12, dadurch gekennzeichnet, dass die letzte Zelle (12) als Elektrolysezelle ausgebildet ist.

15. Vorrichtung nach Anspruch 12, dadurch gekennzeichnet, dass die in den Zellen (1 bis 11) enthaltenen Metalle (Me) in Kugelform neben- und übereinander angeordnet sind.

16. Vorrichtung nach Anspruch 12, dadurch gekennzeichnet, dass die von der Elektrolytlösung kontinuierlich durchströmbaren Zellen in Strömungsrichtung hinter dem Zelleneingang (20) mit einer Einrichtung (23) zum dosierbaren Eintragen eines Metalles sowie in Strömungsrichtung dahinter mit einer Austragseinrichtung (22) für abgeschiedenes Metall und vor dem Zellenausgang (21) mit einem Filter (24) versehen sind (Figur 3).

17. Vorrichtung nach Anspruch 15, dadurch gekennzeichnet, dass die Zellen vor ihrem Ausgang (21) mit einer den Elektrolytstrom kontinuierlich auf Metall-Ionen überwachenden Analyseneinrichtung (26) ausgestattet sind.

# Fig.1

Hg   Ag   Cu   Pb   Sn   Ni   Co   Cd   Fe   Cr   Zn

$$Zn$$

$$\ominus \quad \oplus$$

20 → (1)→(2)→(3)→(4)→(5)→(6)→(7)→(8)→(9)→(10)→(11) → □ → 21

12

Au   Hg   Ag   Cu   Pb   Sn   Ni   Co   Cd   Fe   Cr

$HBF_4$ - Recycl.

# Fig.2

→ 21

Me

20 →

↓
22

# Fig.3

23   25     24   26

20 → → 21

↓
22

EP 0 310 563 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 283 224 (STEWART)<br>* Figuren; Spalte 2, Zeilen 26-40; Spalte 5, Zeilen 21-31 *<br>--- | 1,2,5-7 ,11 | C 22 B 7/00<br>C 22 B 3/00 |
| Y | FR-A-2 550 805 (ASTURIENNE FRANCE)<br>* Seite 3, Zeile 33; Seite 4, Zeilen 22-24; Seite 5, Zeilen 20-25; Beispiele 4,5,6 *<br>--- | 1-4,6,7 ,11-16 | |
| Y | DE-A-2 913 893 (DEGUSSA AG)<br>* Seite 4; Zeilen 32-36 *<br>--- | 1-4,6,7 ,11-16 | |
| A | US-A-4 096 064 (DU FRESNE)<br>* Spalte 2, Zeile 24; Spalte 6, Zeile 64; Zusammenfassung *<br>--- | 1,2,7, 11,12, 15 | |
| A | DE-A-2 755 068 (K.H.D. AG)<br>* Seite 12; Seite 13, Absatz 2; Seite 17, Absatz 2 *<br>--- | 1-4,7, 11-14 | |
| A | FR-A-2 036 114 (MAYOR et al.)<br>* Figuren; Seite 7, Zeilen 5-37 *<br>--- | 1-7 | RECHERCHIERTE SACHGEBIETE (Int. Cl.4) |
| A | FR-A- 716 845 (INTERNATIONAL NICKEL CO. INC.)<br>* Seite 3, Zeile 74 - Seite 3, Zeile 1; Seite 4, Zeilen 25-29 *<br>--- | 3 | C 22 B |
| A | DE-A-2 101 072 (OUTOKUMPU OY)<br>* Seite 5, Absatz 2 - Seite 6, Absatz 1 *<br>--- | 1-4,7, 11,12 | |
| A | US-A-3 985 554 (McCOY)<br>* Spalte 2, Zeilen 15-25 *<br>--- | 9 | |
| A | FR-A- 472 764 (PERREUR-LLOYD)<br>* Seite 1, Zeilen 38-44; Anspruch 1 *<br>--- -/- | | |

Der vorliegende Recherchenbericht wurde für alle Patentansprüche erstellt

| Recherchenort | Abschlußdatum der Recherche | Prüfer |
|---|---|---|
| DEN HAAG | 02-12-1988 | CZECH B.P. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 747 003 (KAZMECHANOBR)<br>* Figur 1; Seite 9, letzter Absatz *<br>--- | 13 | |
| A | DE-A-2 617 348 (SOCIETE MINIERE ET METALLURGIQUE DE PENARROYA)<br>* Seite 16, Zeilen 9-12; Seite 22, letzter Absatz; Seite 23, Absatz 1 *<br>--- | 1,3,4,7 ,11,12, 17 | |
| A | US-A-1 549 063 (CHRISTENSEN)<br>* Seite 1, Zeilen 81-88,108-111 *<br>--- | 1,3-7 | |
| A | FR-A-2 073 803 (ASTURIANA DE ZINC S.A.)<br>* Ansprüche 4-6; Seite 4, Zeile 28 - Seite 5, Zeile 6 *<br>--- | 1,3-7 | |
| A | FR-A-2 230 741 (METALLURGIE HOBOKEN-OVERPELT)<br>* Seite 3, Zeilen 4-6 *<br>--- | 1,3-7 | |
| A | EP-A-0 155 250 (BOLIDEN AB)<br>* Ansprüche 3,9,10 *<br>----- | 1,5,6 | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 02-12-1988 | CZECH B.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)